# FASCICULE DE BREVET EUROPEEN

(11) **EP 2 723 602 B1**
(45) Date de publication et mention de la délivrance du brevet: **16.11.2016**
(21) Numéro de dépôt: 12738491.5
(22) Date de dépôt: 14.06.2012
(51) Int. Cl.: B60K 31/18, G08G 1/0967, G05D 13/62, G08G 1/0962

(54) **PROCEDE D'AIDE A LA CONDUITE D'UN VEHICULE**
FAHRHILFEVERFAHREN FÜR EIN FAHRZEUG
VEHICLE DRIVING ASSISTANCE METHOD

(30) Priorité: 27.06.2011 FR 1155657
(43) Date de publication de la demande: 30.04.2014
(73) Titulaire: Peugeot Citroën Automobiles SA, 78140 Vélizy-Villacoublay (FR)
(72) Inventeur: DUPERRAY, Delphine, 92360 Meudon La Fôret (FR); MORELLEC, Olivier, 91190 St Aubin (FR)
(86) Numéro de dépôt international: PCT/FR2012/051338
(87) Numéro de publication internationale: WO 2013/001202

(56) Documents cités:
- WO-A1-2007/001102
- WO-A1-2011/037472

## Description

L'invention concerne le domaine des procédés d'aide à la conduite d'un véhicule. Un procédé d'aide à la conduite d'un véhicule automatise ou simplifie tout ou partie des tâches de conduite du véhicule dévolues au conducteur. Certains procédés d'aide à la conduite d'un véhicule aident l'utilisateur à mieux respecter la limite de vitesse du lieu où se trouve son véhicule, notamment en l'informant de cette limite de vitesse.

Selon un premier art antérieur, par exemple décrit dans la demande de brevet européenne EP 1096457 ou dans la demande de brevet internationale WO 04068439, il est connu un procédé d'aide à la conduite qui d'abord signale au conducteur la limite de vitesse du lieu où se situe son véhicule et qui ensuite adapte automatiquement, sans intervention active du conducteur, la vitesse de consigne au niveau de la limite de vitesse. Même si le confort du conducteur peut être considéré comme optimisé dans la mesure où tout le processus de modification de la vitesse de consigne est automatisé, un inconvénient de ce premier art antérieur est une sécurité de roulage de véhicule insuffisante dans la mesure où d'une part le conducteur ne prend pas conscience directement du changement de vitesse de consigne mais seulement indirectement lorsque le véhicule freine ou accélère seul, ce qui peut le surprendre et le déstabiliser, et d'autre part le taux d'erreur dans la détermination de la limite de vitesse est encore aujourd'hui non négligeable, ce qui peut amener le véhicule à se caler sur une vitesse de consigne inadaptée à son environnement de roulage, voire dangereuse.

Selon un deuxième art antérieur, par exemple décrit dans la demande de brevet US 2007262883, il est connu (dans le mode non « subordinate » des figures 1 à 3) d'afficher la limite de vitesse du lieu où se situe le véhicule, en laissant le conducteur ensuite totalement libre de dérouler de manière entièrement manuelle le processus de modification de la vitesse de consigne. Même si la sécurité de roulage de véhicule peut être considérée comme optimisée dans la mesure où tout le processus de modification de la vitesse de consigne reste sous le contrôle direct et entier du conducteur, un inconvénient de ce deuxième art antérieur est un confort du conducteur insuffisant dans la mesure où d'une part rien ne vient stimuler le conducteur pour lui faire prendre conscience qu'il serait utile de modifier la vitesse de consigne pour mieux l'adapter, le cas échéant, à la limite de vitesse du lieu où se situe le véhicule, et d'autre part rien ne vient l'aider à modifier cette vitesse de consigne de manière plus aisée et plus automatisée pour mieux l'adapter à la limite de vitesse du lieu où se situe le véhicule.

On connait par ailleurs du document WO2001/037472A1, un procédé d'aide à la conduite conforme au préambule de la revendication 1.

En s'écartant à la fois d'une part de l'art antérieur tout automatique après simple information et d'autre part de l'art antérieur tout manuel après simple information, l'invention ambitionne d'optimiser le compromis réalisé entre d'une part la sécurité de roulage du véhicule et d'autre part le confort du conducteur, en maintenant un seuil de contrôle suffisant du conducteur, pour garantir un minimum de sécurité, tout en lui facilitant grandement la tâche, pour offrir un maximum de confort compatible avec le minimum de sécurité. Pour cela, l'invention propose au conducteur l'acceptation de la modification de la vitesse de consigne, sur la base d'une vitesse recommandée fonction de la limite de vitesse, en simplifiant l'opération de modification de la vitesse de consigne par le conducteur.

Selon l'état de la fonction de contrôle de vitesse du véhicule utilisant une vitesse de consigne, cette vitesse de consigne peut être absente lorsque la fonction de contrôle est éteinte, peut être présente et sélectionnée lorsque la fonction de contrôle est allumée (sélectionnée, mais en mode pause ou désactivé) mais non active (donc la fonction de contrôle est prête à adapter la vitesse courante du véhicule à la vitesse de consigne sélectionnée mais ne l'adapte pas effectivement), peut être présente et activée (donc à fortiori sélectionnée), lorsque la fonction de contrôle est allumée (sélectionnée) et activée (donc la fonction de contrôle adapte effectivement la vitesse courante du véhicule à la vitesse de consigne activée).

Selon l'invention, il est prévu un procédé d'aide à la conduite d'un véhicule, conforme à la partie caractérisante de la revendication 1.

Préférentiellement, lorsque la vitesse de consigne n'est ni sélectionnée ni activée, le procédé d'aide à la conduite de véhicule selon l'invention se contente d'afficher une information de limite de vitesse, sans inciter et sans aider le conducteur à changer la vitesse de consigne, puisque celle-ci est absente, la fonction correspondante de contrôle de vitesse étant éteinte.

Dans un premier mode d'utilisation préférentielle du procédé d'aide à la conduite d'un véhicule selon l'invention, d'une part l'étape d'affichage affiche, de manière incitative, le cas échéant, la vitesse recommandée ; et d'autre part l'étape de choix comprend alors, pour le conducteur du véhicule, successivement : une phase de demande d'affichage de la vitesse recommandée parmi plusieurs vitesses proposées ; une phase de choix d'une vitesse choisie parmi les vitesses proposées par une seule action de validation du conducteur.

Ce premier mode d'utilisation est un mode standard qui simplifie moins l'opération de modification de la vitesse de consigne, qui optimise moins le confort du conducteur en maximisant la sécurité de roulage du véhicule. Ce premier mode est bien adapté pour un conducteur qui prend en main ou ne maîtrise pas bien le procédé d'aide à la conduite de véhicule selon l'invention car il l'utilise rarement ou l'a peu utilisé.

Avantageusement, les vitesses proposées comprennent d'une part la vitesse recommandée et d'autre part au moins une vitesse préprogrammée qui est indépendante de la limite de vitesse du lieu ou se situe le véhicule. Cela permet au conducteur de modifier la valeur de consigne à une autre valeur qu'à celle de la limite de vitesse, en fonction de circonstances particulières connues du conducteur et non intégrées par le procédé d'aide à la conduite de véhicule selon l'invention.

Avantageusement, la vitesse recommandée est affichée d'une manière différente de l'affichage de l'autre ou des autres vitesses proposées. Cela permet de mieux attirer l'attention du conducteur sur la vitesse recommandée par rapport aux autres vitesses proposées.

Avantageusement, l'étape d'affichage de manière incitative de la vitesse recommandée est réalisée sur un premier écran de visualisation qui est différent d'un deuxième écran de visualisation sur lequel est affichée la vitesse recommandée parmi les vitesses proposées.

Avantageusement, le premier écran de visualisation est situé du côté conducteur tandis que le deuxième écran de visualisation est situé entre conducteur et passager.

Ainsi, l'utilisation d'un premier écran côté conducteur permet d'empêcher le passager de modifier la vitesse de consigne à l'insu du conducteur, tandis que l'utilisation d'un deuxième écran entre conducteur et passager, le deuxième écran étant généralement plus grand que le premier écran au niveau de la surface d'affichage car il y a plus de place entre conducteur et passager que côté passager, permet de rendre plus conviviale et plus ergonomique pour le conducteur, l'opération de modification de la vitesse de consigne, que si le conducteur devait modifier cette vitesse de consigne sur le premier écran de visualisation plus petit.

Le premier écran de visualisation est par exemple un écran du commodo situé au niveau de la colonne de direction du véhicule voire au niveau du volant du véhicule. Le deuxième écran de visualisation est par exemple un écran tactile situé en milieu de planche de bord de véhicule ou en haut de console avant de véhicule.

Dans un deuxième mode d'utilisation préférentielle du procédé d'aide à la conduite d'un véhicule selon l'invention, d'une part l'étape d'affichage affiche, de manière incitative, le cas échéant, la vitesse recommandée comme seule vitesse proposée ; et d'autre part l'étape de choix consiste alors, pour le conducteur du véhicule, en une seule action de validation dédiée de la vitesse recommandée.

Ce deuxième mode d'utilisation est un mode expert qui simplifie le plus l'opération de modification de la vitesse de consigne, qui optimise le plus le confort du conducteur en réduisant un peu la sécurité de roulage du véhicule. Ce deuxième mode est bien adapté pour un conducteur qui maîtrise bien le procédé d'aide à la conduite de véhicule selon l'invention car il l'utilise souvent.

Les deux modes de réalisation, mode expert et mode standard, peuvent coexister, offrant ainsi le choix du mode au conducteur, lui offrant ainsi plus de souplesse d'utilisation, en fonction de la progression de sa maîtrise du procédé d'aide à la conduite de véhicule selon l'invention.

Avantageusement, dans le deuxième mode d'utilisation expert, l'étape d'affichage affiche, de manière incitative, le cas échéant, la vitesse recommandée comme seule vitesse proposée, et l'étape de choix consiste alors, pour le conducteur du véhicule, en une seule action de validation dédiée de la vitesse recommandée. Ainsi, une acceptation automatique et distraite de la modification de vitesse de consigne par le conducteur est évitée du fait du caractère dédié de l'action de validation par le conducteur, ce caractère dédié attirant instinctivement son attention.

Dans une première réalisation, l'action de validation dédiée est une manière dédiée d'actionner une touche multifonction.

L'action de validation dédiée est par exemple un appui long, c'est-à-dire un appui substantiellement plus long qu'un appui standard usuellement considéré comme un appui court ou instantané. L'appui long est par exemple au moins deux ou trois fois plus long que l'appui standard. L'action de validation dédiée est par exemple un double appui successif sur la touche multifonction, l'appui pouvant alors être standard, c'est-à-dire instantané ou court.

Dans une deuxième réalisation, l'action de validation dédiée est un actionnement d'une touche dédiée. La touche dédiée est par exemple un bouton dédiée ou une molette dédiée.

De préférence, la vitesse recommandée correspond à la limite de vitesse du lieu où se situe le véhicule, elle lui est avantageusement égale. Elle pourrait être légèrement inférieure en intégrant une marge de sécurité (par exemple 5% de moins) prédéfinie ou paramétrable par le conducteur.

De préférence, la limite de vitesse utilisée dans l'étape de détermination de la vitesse recommandée est obtenue par reconnaissance de panneau situé dans le lieu où se situe le véhicule. Ce type d'obtention de limite de vitesse par reconnaissance de panneau le long de la route où circule le véhicule est aujourd'hui plus fiable qu'une obtention par information issue du système de navigation du véhicule. Ce type d'obtention par reconnaissance de panneau nécessite toutefois une caméra à bord du véhicule, laquelle caméra peut préexister pour réaliser d'autres fonctions, et un procédé de traitement d'image adapté.

De préférence, lorsque la vitesse de consigne est sélectionnée mais non activée, l'étape de remplacement de la vitesse de consigne sélectionnée par la vitesse choisie est suivie par une étape d'activation automatique de la vitesse choisie comme nouvelle vitesse de consigne. Cela permet de simplifier globalement pour le conducteur l'opération de modification de vitesse de consigne en diminuant le nombre d'actions élémentaires à effectuer par le conducteur. En l'occurrence, le conducteur n'a pas à activer la nouvelle vitesse de consigne sélectionnée, cela est fait automatiquement une fois la nouvelle vitesse de consigne sélectionnée.

De préférence, l'étape d'affichage de la vitesse recommandée est retardée pendant la période où le conducteur est en train de modifier de lui-même la vitesse de consigne sélectionnée.

Cela permet de ne pas perturber le conducteur lorsque celui-ci est déjà occupé avec une opération de modification de la vitesse de consigne.

De préférence, la vitesse de consigne sélectionnée est une vitesse de consigne sélectionnée dans une fonction de contrôle de vitesse de véhicule parmi le groupe de fonctions incluant, un régulateur de vitesse, un régulateur de vitesse intelligent, un limiteur de vitesse, une fonction de gestion de la distance ou du temps inter véhicule entre ledit véhicule et le véhicule suivi par ledit véhicule (ACC ou « automatic cruise control » en anglais, ou bien ARTIV). Plus préférentiellement, la fonction de contrôle de vitesse de véhicule est choisie parmi le régulateur de vitesse, intelligent ou pas, et le limiteur de vitesse, car ces fonctions étant moins sophistiquées que la fonction de gestion de la distance ou du temps inter véhicule entre ledit véhicule et le véhicule suivi par ledit véhicule, elles nécessiteront plus souvent une modification de la vitesse consigne selon le changement de paramètres dans le véhicule ou dans l'environnement du véhicule.

Un véhicule inclut notamment un camion, une voiture, un bus, un train. Un véhicule est de préférence un véhicule à moteur, avantageusement terrestre. Un véhicule est préférentiellement une voiture.

L'invention va maintenant être décrite plus en détail à l'aide des figures ci-après, données à titre d'exemples illustratifs et non limitatifs, où :
- la figure 1 représente schématiquement un exemple d'un écran d'affichage informatif dans le déroulement du procédé d'aide à la conduite de véhicule selon l'invention ;
- la figure 2 représente schématiquement un exemple d'un écran d'affichage incitatif dans le déroulement du procédé d'aide à la conduite de véhicule selon l'invention ;
- la figure 3 représente schématiquement un exemple d'un écran d'affichage de choix parmi plusieurs vitesses proposées dans le déroulement du procédé d'aide à la conduite de véhicule selon l'invention.

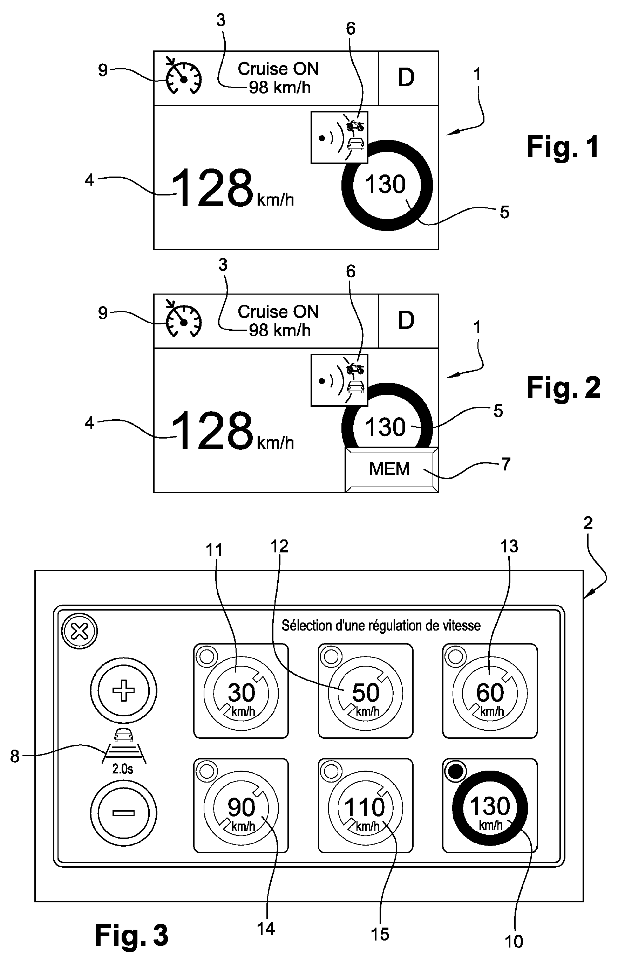

La figure 1 représente schématiquement un exemple d'un écran d'affichage informatif dans le déroulement du procédé d'aide à la conduite de véhicule selon l'invention.

Sur un premier écran 1 situé côté conducteur au niveau du commodo près du volant, une information 9 indique qu'une fonction de contrôle de vitesse de véhicule de type ACC est allumée et qu'une vitesse de consigne est sélectionnée. Une information 3 indique que la fonction de contrôle de vitesse de véhicule de type ACC est activée et qu'une vitesse de consigne est activée, donc que le système adapte la vitesse courante du véhicule à la vitesse de consigne sélectionnée et activée, en l'absence de véhicule suivi par le véhicule du conducteur. Une information 4 indique la vitesse courante du véhicule, montrant ici que le conducteur du véhicule est en phase d'accélération volontaire par rapport à la vitesse de consigne activée. L'information 5 indique la valeur de la limite de vitesse. L'information 6 indique qu'un radar de contrôle de vitesse en bord de route sera bientôt à hauteur du véhicule.

Sur la figure 1, l'affichage de la vitesse recommandée égale à la limite de vitesse, est réalisé par l'intermédiaire de l'information 5, de manière purement informative. Si le conducteur veut adapter la vitesse de consigne à cette limite de vitesse, il va devoir le faire entièrement manuellement.

La figure 2 représente schématiquement un exemple d'un écran d'affichage incitatif dans le déroulement du procédé d'aide à la conduite de véhicule selon l'invention.

Dans le mode expert, un simple appui long ou alternativement un simple double appui soit au niveau de la zone couverte par la touche d'information 7 (si le premier écran de visualisation 1 est un écran tactile) soit au niveau de la touche MEM éventuellement déportée (sinon), permet au procédé d'aide à la conduite de véhicule selon l'invention de remplacer automatiquement la vitesse de consigne sélectionnée, et le cas échéant activée, par la vitesse recommandée et à activer cette nouvelle vitesse de consigne (égale à la vitesse recommandée).

Le mode standard est maintenant décrit. L'affichage de la vitesse recommandée est sur la figure 2 réalisé de manière incitative. En effet, en plus de l'information 5 indiquant une vitesse recommandée égale à la limite de vitesse, une information supplémentaire 7 est affichée aussi pour inciter le conducteur à modifier la vitesse de consigne en lui indiquant qu'il peut accéder à un choix de plusieurs vitesses proposées en activant une certaine touche, la touche MEM, l'information supplémentaire 7 pouvant être de surcroît clignotante. Une simple couleur plus voyante ou un simple clignotement de l'information 5 pourrait également faire l'affaire. Lorsque le conducteur active la touche MEM correspondant à l'information 7, un deuxième écran de visualisation 2 situé en milieu de planche de bord ou au dessus de la console centrale affiche plusieurs vitesses proposées, ce qui est détaillé au niveau de la figure 3.

La figure 3 représente schématiquement un exemple d'un écran d'affichage de choix parmi plusieurs vitesses proposées dans le déroulement du procédé d'aide à la conduite de véhicule selon l'invention.

Dans le mode expert, le deuxième écran de visualisation 2 n'est pas utilisé.

Le mode standard est maintenant décrit. Le deuxième écran de visualisation 2 affiche la vitesse recommandée 10 égale à la limite de vitesse précédemment affichée sur le premier écran de visualisation 1 au niveau des figures 1 et 2. Il affiche également cinq autres vitesses proposées 11 à 15 qui sont avantageusement des vitesses préprogrammées et qui sont indépendantes de la vitesse recommandée. Une information 8 affiche une valeur de temps inter véhicule. Le deuxième écran de visualisation 2 étant par exemple un écran tactile, il suffit au conducteur d'appuyer au niveau de l'une des vitesses proposées 10 à 15 pour que celle-ci, à savoir la vitesse choisie par le conducteur parmi les vitesses proposées, que ce soit la vitesse recommandée ou une autre vitesse proposée, remplace automatiquement la vitesse de consigne précédente, sélectionnée ou le cas échéant activée, et devient la nouvelle vitesse de consigne, en activant cette nouvelle vitesse de consigne, que la vitesse de consigne précédente ait été activée ou seulement sélectionnée. S'il pleut à l'extérieur du véhicule, le conducteur peut préférer choisir 110 km/h plutôt que 130km/h, ou même 90km/h s'il pleut énormément, par mesure de prudence, et ceci, malgré une vitesse recommandée à 130km/h correspondant à la limite de vitesse sur autoroute par exemple.

## Revendications

1. Procédé d'aide à la conduite d'un véhicule, comprenant successivement :
- une étape de détermination d'une vitesse recommandée (5, 10) qui est fonction au moins de la limite de vitesse du lieu où se situe le véhicule ;
- une étape de comparaison, en présence d'une vitesse de consigne sélectionnée, de la vitesse recommandée (5, 10) avec la vitesse de consigne sélectionnée ;
**caractérisé en ce qu'**il comprend en outre :
- une étape d'affichage, pour le conducteur du véhicule, de la vitesse recommandée (5, 10), soit d'une manière incitative, en présence d'une vitesse de consigne sélectionnée, lorsque la vitesse recommandée (5, 10) est différente de la vitesse de consigne sélectionnée, parmi une ou plusieurs vitesses proposées (10 à 15), soit d'une manière informative,
et **en ce que** la manière incitative étant différente de la manière informative, ledit procédé comprend :
- une étape de choix, par le conducteur du véhicule, le cas échéant, d'une vitesse choisie parmi la ou les vitesses proposées (10 à 15) ;
- une étape de remplacement de la vitesse de consigne sélectionnée par la vitesse choisie.

2. Procédé d'aide à la conduite d'un véhicule selon la revendication 1, **caractérisé en ce que** :
- l'étape d'affichage affiche, de manière incitative, le cas échéant, la vitesse recommandée (5, 10) ;
- l'étape de choix comprend alors, pour le conducteur du véhicule, successivement :
- une phase de demande d'affichage de la vitesse recommandée (5, 10) parmi plusieurs vitesses proposées (10 à 15) ;
- une phase de choix d'une vitesse choisie parmi les vitesses proposées (10 à 15) par une seule action de validation du conducteur.

3. Procédé d'aide à la conduite d'un véhicule selon la revendication 2, **caractérisé en ce que** les vitesses proposées (10 à 15) comprennent d'une part la vitesse recommandée (5, 10) et d'autre part au moins une vitesse préprogrammée (11 à 15) qui est indépendante de la limite de vitesse du lieu ou se situe le véhicule.

4. Procédé d'aide à la conduite d'un véhicule selon la revendication 2 ou 3, **caractérisé en ce que** la vitesse recommandée (5, 10) est affichée d'une manière différente de l'affichage de l'autre ou des autres vitesses proposées (11 à 15).

5. Procédé d'aide à la conduite d'un véhicule selon l'une quelconque des revendications 2 à 4, **caractérisé en ce que** l'étape d'affichage de manière incitative de la vitesse recommandée (5, 10) est réalisée sur un premier écran de visualisation (1) qui est différent d'un deuxième écran de visualisation (2) sur lequel est affichée la vitesse recommandée (5, 10) parmi les vitesses proposées (10 à 15).

6. Procédé d'aide à la conduite d'un véhicule selon la revendication 5, **caractérisé en ce que** le premier écran de visualisation (1) est situé du côté conducteur tandis que le deuxième écran de visualisation (2) est situé entre conducteur et passager.

7. Procédé d'aide à la conduite d'un véhicule selon la revendication 1, **caractérisé en ce que** :
- l'étape d'affichage affiche, de manière incitative, le cas échéant, la vitesse recommandée (5, 10) comme seule vitesse proposée (10) ;
- l'étape de choix consiste alors, pour le conducteur du véhicule, en une seule action de validation dédiée de la vitesse recommandée (5, 10).

8. Procédé d'aide à la conduite d'un véhicule selon la revendication 7, **caractérisé en ce que** l'action de validation dédiée est une manière dédiée d'actionner une touche multifonction.

9. Procédé d'aide à la conduite d'un véhicule selon la revendication 7, **caractérisé en ce que** l'action de validation dédiée est un actionnement d'une touche dédiée.

10. Procédé d'aide à la conduite d'un véhicule selon l'une quelconque des revendications précédentes, **caractérisé en ce que** la vitesse recommandée (5, 10) correspond à la limite de vitesse du lieu où se situe le véhicule.

11. Procédé d'aide à la conduite d'un véhicule selon l'une quelconque des revendications précédentes, **caractérisé en ce que** la limite de vitesse utilisée dans l'étape de détermination de la vitesse recommandée (5, 10) est obtenue par reconnaissance de panneau situé dans le lieu où se situe le véhicule.

12. Procédé d'aide à la conduite d'un véhicule selon l'une quelconque des revendications précédentes, **caractérisé en ce que** lorsque la vitesse de consigne est sélectionnée mais non activée, l'étape de remplacement de la vitesse de consigne sélectionnée par la vitesse choisie est suivie par une étape d'activation automatique de la vitesse choisie comme nouvelle vitesse de consigne.

13. Procédé d'aide à la conduite d'un véhicule selon l'une quelconque des revendications précédentes, **caractérisé en ce que** l'étape d'affichage de la vitesse recommandée (5, 10) est retardée pendant la période où le conducteur est en train de modifier de lui-même la vitesse de consigne sélectionnée.

14. Procédé d'aide à la conduite d'un véhicule selon l'une quelconque des revendications précédentes, **caractérisé en ce que** la vitesse de consigne sélectionnée est une vitesse de consigne sélectionnée dans une fonction de contrôle de vitesse de véhicule parmi le groupe de fonctions incluant, un régulateur de vitesse, un régulateur de vitesse intelligent, un limiteur de vitesse, une fonction de gestion de la distance ou du temps inter véhicule entre ledit véhicule et le véhicule suivi par ledit véhicule.

## Patentansprüche

1. Fahrhilfeverfahren für ein Fahrzeug, aufeinanderfolgend umfassend:
- einen Bestimmungsschritt einer empfohlenen Geschwindigkeit (5, 10), der mindestens von der Geschwindigkeitsbegrenzung des Orts, wo sich das Fahrzeug befindet, abhängt;
- einen Vergleichsschritt in Anwesenheit einer ausgewählten Vorgabegeschwindigkeit der empfohlenen Geschwindigkeit (5, 10) mit der ausgewählten Vorgabegeschwindigkeit;
**dadurch gekennzeichnet, dass** er unter anderem umfasst:
- einen Anzeigeschritt an den Fahrer des Fahrzeugs der empfohlenen Geschwindigkeit (5, 10) auf eine anregende Art in Anwesenheit einer ausgewählten Vorgabegeschwindigkeit, wenn die empfohlene Geschwindigkeit (5, 10) sich von der ausgewählten Vorgabegeschwindigkeit unterscheidet, unter einer oder mehreren vorgeschlagenen Geschwindigkeiten (10 bis 15), oder auf eine informative Art,
und dadurch, dass die anregende Art sich von der informativen Art unterscheidet, das Verfahren umfassend:
- einen Auswahlschritt, gegebenenfalls, durch den Fahrer des Fahrzeugs einer gewählten Geschwindigkeit unter den vorgeschlagenen Geschwindigkeiten (10 bis 15);
- einen Ersetzungsschritt der ausgewählten Vorgabegeschwindigkeit durch die gewählte Geschwindigkeit.

2. Fahrhilfeverfahren für ein Fahrzeug nach Anspruch 1, **dadurch gekennzeichnet, dass**:
- der Anzeigeschritt gegebenenfalls auf anregende Art die empfohlene Geschwindigkeit (5, 10) anzeigt;
- der Auswahlschritt dann für den Fahrer des Fahrzeugs aufeinanderfolgend umfasst:
- eine Anforderungsphase der Anzeige der empfohlenen Geschwindigkeit (5, 10) unter den mehreren vorgeschlagenen Geschwindigkeiten (10 bis 15)
- eine Auswahlphase einer gewählten Geschwindigkeit unter den vorgeschlagenen Geschwindigkeiten (10 bis 15) durch eine einzige Validierungsaktion des Fahrers.

3. Fahrhilfeverfahren für ein Fahrzeug nach Anspruch 2, **dadurch gekennzeichnet, dass** die vorgeschlagenen Geschwindigkeiten (10 bis 15) einerseits die empfohlene Geschwindigkeit (5, 10) und andererseits mindestens eine vorprogrammierte Geschwindigkeit (11 bis 15) umfassen, die von der Geschwindigkeitsbegrenzung des Orts, wo sich das Fahrzeug befindet unabhängig ist.

4. Fahrhilfeverfahren für ein Fahrzeug nach Anspruch 2 oder 3, **dadurch gekennzeichnet, dass** die empfohlene Geschwindigkeit (5, 10) auf eine verschiedene Art als die Anzeige der anderen vorgeschlagenen Geschwindigkeiten (11 bis 15) angezeigt wird.

5. Fahrhilfeverfahren für ein Fahrzeug nach einem der Ansprüche 2 bis 4, **dadurch gekennzeichnet, dass** der Anzeigeschritt auf anregende Art der empfohlenen Geschwindigkeit (5, 10) an einem ersten Anzeigebildschirm (1) durchgeführt wird, der sich vom zweiten Anzeigebildschirm (2) unterscheidet, an dem die empfohlene Geschwindigkeit (5, 10) unter den vorgeschlagenen Geschwindigkeiten (10 bis 15) angezeigt wird.

6. Fahrhilfeverfahren für ein Fahrzeug nach Anspruch 5, **dadurch gekennzeichnet, dass** sich der erste Anzeigebildschirm (1) auf der Fahrerseite befindet, während sich der zweite Anzeigebildschirm (2) zwischen Fahrer und Beifahrer befindet.

7. Fahrhilfeverfahren für ein Fahrzeug nach Anspruch 1, **dadurch gekennzeichnet, dass**:
- der Anzeigeschritt auf anregende Art gegebenenfalls die empfohlene Geschwindigkeit (5, 10) als einzige vorgeschlagene Geschwindigkeit (10) anzeigt;
- der Auswahlschritt für den Fahrer des Fahrzeugs dann in einer einzigen dedizierten Validierungsaktion der empfohlenen Geschwindigkeit (5, 10) besteht.

8. Fahrhilfeverfahren für ein Fahrzeug nach Anspruch 7, **dadurch gekennzeichnet, dass** die dedizierte Validierungsaktion eine dedizierte Art der Betätigung einer Multifunktionstaste ist.

9. Fahrhilfeverfahren für ein Fahrzeug nach Anspruch 7, **dadurch gekennzeichnet, dass** die dedizierte Validierungsaktion eine Betätigung einer dedizierten Taste ist.

10. Fahrhilfeverfahren für ein Fahrzeug nach einem der vorherigen Ansprüche, **dadurch gekennzeichnet, dass** die empfohlene Geschwindigkeit (5, 10) der Geschwindigkeitsbegrenzung des Orts entspricht, wo sich das Fahrzeug befindet.

11. Fahrhilfeverfahren für ein Fahrzeug nach einem der vorherigen Ansprüche, **dadurch gekennzeichnet, dass** die verwendete Geschwindigkeitsbegrenzung im Bestimmungsschritt der empfohlenen Geschwindigkeit (5, 10) durch Erkennen des Schilds am Ort, wo sich das Fahrzeug befindet, erlangt wird.

12. Fahrhilfeverfahren für ein Fahrzeug nach einem der vorherigen Ansprüche, **dadurch gekennzeichnet, dass** wenn die Vorgabegeschwindigkeit ausgewählt aber nicht aktiv ist, dem Ersetzungsschritt der ausgewählten Vorgabegeschwindigkeit durch die gewählte Geschwindigkeit ein automatischer Aktivierungsschritt der gewählten Geschwindigkeit als neue Vorgabegeschwindigkeit folgt.

13. Fahrhilfeverfahren für ein Fahrzeug nach einem der vorherigen Ansprüche, **dadurch gekennzeichnet, dass** der Anzeigeschritt der empfohlenen Geschwindigkeit (5, 10) während des Zeitraums, wo der Fahrer dabei ist, selbst die ausgewählte Vorgabegeschwindigkeit zu ändern, verzögert wird.

14. Fahrhilfeverfahren für ein Fahrzeug nach einem der vorherigen Ansprüche, **dadurch gekennzeichnet, dass** die ausgewählte Vorgabegeschwindigkeit eine ausgewählte Vorgabegeschwindigkeit in einer Geschwindigkeitsregelfunktion des Fahrzeugs als Teil der Funktionsgruppe enthaltend einen Geschwindigkeitsregler, einen intelligenten Geschwindigkeitsregler, einen Geschwindigkeitsbegrenzer, eine Abstandsregelungsfunktion oder Zeitregelungsfunktion zwischen diesem Fahrzeug und dem Fahrzeug, dem dieses Fahrzeug folgt, ist

## Claims

1. Method for assisting with the driving of a vehicle, comprising successively:
- a step of determining a recommended speed (5, 10) which is according to at least the speed limit of the location where the vehicle is located;
- a step of comparing, in the presence of a selected speed setting, the recommended speed (5, 10) with the selected speed setting;
**characterised in that** it further comprises:
- a step of displaying, for the driver of the vehicle, the recommended speed (5, 10), either in an indicative manner, in the presence of a selected speed setting, when the recommended speed (5, 10) is different from the selected speed setting, from among one or several suggested speeds (10 to 15), or in an informative manner,
and **in that** the indicative manner is different from the informative manner, said method comprises:
- a step of choosing, by the driver of the vehicle, where applicable, a speed chosen from among the suggested speed or speeds (10 to 15);
- a step of replacing the selected speed setting with the chosen speed.

2. Method for assisting with the driving of a vehicle according to claim 1, **characterised in that**:
- the step of displaying displays, indicatively, where applicable, the recommended speed (5, 10);
- the step of choosing then comprises, for the driver of the vehicle, successively:
- a phase of requesting the display of the recommended speed (5, 10) among several suggested speeds (10 to 15),
- a phase of choosing a speed chosen from the suggested speeds (10 to 15) via a single validation action from the driver.

3. Method for assisting with the driving of a vehicle according to claim 2, **characterised in that** the suggested speeds (10 to 15) comprise on the one hand the recommended speed (5, 10) and on the other hand at least one programmed speed (11 to 15) which is independent of the speed limit of the location where the vehicle is located.

4. Method for assisting with the driving of a vehicle according to claim 2 or 3, **characterised in that** the recommended speed (5, 10) is displayed in a manner that is different from the display of the other suggested speed or speeds (11 to 15).

5. Method for assisting with the driving of a vehicle according to any of claims 2 to 4, **characterised in that** the step of indicatively displaying the recommended speed (5, 10) is carried out on a first viewing screen (1) that is different from a second viewing screen (2) whereon the recommended speed is displayed (5, 10) among the suggested speeds (10 to 15).

6. Method for assisting with the driving of a vehicle according to claim 5, **characterised in that** the first viewing screen (1) is located on the driver side while the second viewing screen (2) is located between the driver and the passenger.

7. Method for assisting with the driving of a vehicle according to claim 1, **characterised in that**:
- the step of displaying displays, indicatively, where applicable, the recommended speed (5, 10) as the only suggested speed (10),
- the step of choosing then consists, for the driver of the vehicle, in a single dedicated action of validation of the recommended speed (5, 10).

8. Method for assisting with the driving of a vehicle according to claim 7, **characterised in that** the dedicated action of validation is a dedicated manner for actuating a multi-function button.

9. Method for assisting with the driving of a vehicle according to claim 7, **characterised in that** the dedicated action of validation is an actuating of a dedicated button.

10. Method for assisting with the driving of a vehicle as claimed in any preceding claim, **characterised in that** the recommended speed (5, 10) corresponds to the speed limit of the location where the vehicle is located.

11. Method for assisting with the driving of a vehicle as claimed in any preceding claim, **characterised in that** the speed limit used in the step of determining the recommended speed (5, 10) is obtained by recognition of the sign located in the place where the vehicle is located.

12. Method for assisting with the driving of a vehicle as claimed in any preceding claim, **characterised in that** when the speed setting is selected but not activated, the step of replacing the selected speed setting with the chosen speed is followed by a step of automatic activation of the speed chosen as the new speed setting.

13. Method for assisting with the driving of a vehicle as claimed in any preceding claim, **characterised in that** the step of displaying of the recommended speed (5, 10) is delayed by the period when the driver is in the process of modifying the selected speed setting himself.

14. Method for assisting with the driving of a vehicle as claimed in any preceding claim, **characterised in that** the selected speed setting is a speed setting selected in a vehicle speed control function from the group of functions including, a speed regulator, a smart speed regulator, a speed limiter, a function for managing the inter-vehicle distance or time between said vehicle and the vehicle followed by said vehicle.
